# EUROPEAN PATENT SPECIFICATION

(11) **EP 0 984 906 B1**
(45) Date of publication and mention of the grant of the patent: **02.02.2005**
(21) Application number: 97922023.3
(22) Date of filing: 07.05.1997
(51) Int. Cl.: C04B 18/30, B09B 3/00, C02F 11/00

(54) **PROCESS FOR THE COLD TRANSFORMATION OF MUNICIPAL REFUSES AND/OR SLUDGE INTO INERT MATERIALS, PLANT FOR CARRYING OUT SAID PROCESS AND PRODUCTS OBTAINED**
VERFAHREN ZUR KALTUMWANDLUNG VON STADTMÜLL UND/ODER SCHLAMM IN INERTEN MATERIALIEN, ANLAGE ZUR DURCHFÜHREN DES VERFAHRENS UND SO ERHALTENE PRODUKTE
PROCEDE DE TRANSFORMATION A FROID DE DECHETS URBAINS OU DE BOUES LIQUIDES EN MATERIAUX INERTES, INSTALLATION SERVANT A METTRE CE PROCEDE EN APPLICATION ET PRODUITS OBTENUS

(43) Date of publication of application: 15.03.2000
(73) Proprietor: Bernabei, Raffaello, 00186 Roma (IT)
(72) Inventor: Bernabei, Raffaello, 00186 Roma (IT)
(74) Representative: Iannone, Carlo Luigi
(86) International application number: PCT/IT1997/000101
(87) International publication number: WO 1998/050319

(56) References cited:
- EP-A- 0 602 293
- DE-A- 2 224 363
- FR-A- 2 286 116
- FR-A- 2 337 588
- FR-A- 2 687 081
- IT-B- 1 244 506

## Description

The present invention concerns a process for the cold transformation of municipal refuses and/or sludge into inert materials, as well as a plant for carrying out said process and the products obtained.

As it is well known, dumps have noticeable environmental impact, even if it has been tried to minimise said environmental ecological unbalances by cultivation technologies often expensive and not sufficient.

Waterproofing does not guarantee in any case a perfect tightness, allowing the percolation and the diffusion within the deep stratum of the anaerobic fermentation products and of tonic products form the starting refuses.

Notwithstanding the attention given by the skilled in this field, these aspects have not been solved as yet, particularly as far as the forecast and prevention connected with the use of the present Urban Solid Refuses dumps (environmental degradation, atmospheric and water stratum pollution, miasma, rodents, etc.) presently particularly constituting a concern for the people asking for the motion of dumps away from the lived zones and from the factories, parks, i.e. from any place connected with the man life.

Remarkable are the expenses involved in this kind of service, as well as cost for the users. It should be sufficient to think about the purchasing of the zones, the related works, the management of the employees and of the machines.

Furthermore, the troubles for the road users during the transportation of the USR from the collection places to the transfer station and then up to the final dump (about 100,000 transfers per day) cannot be forgotten.

If it is taken into consideration the daily amount of the USR in average produced in Italy, we reach impressive numbers.

In fact, supposing an average of 0.94 Kg/day per person, we reach considering a population of 50,000,000, a daily average production of 47,000 t/day, corresponding to a compact volume of about 770,000 m³/day.

Considering an average height of the compacted refuse of about 5 m, it can be desumed that every day a surface of about 150,000 m² is covered, and the hypothetical recover of these zones lasts tenth of years.

At present, an alternative to the above is represented by the incineration, that when is coupled to the recover of the heat, is called "thermodestroyer".

It can be denied that under the environmental impact it produces unbalances of the ecosystem, due to the high amount of carbon dioxide, thus consuming enormous amount of oxygen and also producing dioxin in view of the presence of plastic materials.

Moreover, it is know that sludge and urban solid refuses burning produce a high amount of sulphur dioxide, so that an increase of acid rains would be induces, thus the problem of the emission is in any case remarkable and difficult to be managed, while the ashes placement shall require suitable dumps.

The basis of the solution according to the present invention is the philosophy of the conversion of refuse into "first - second" matter. "First": since its recover allows to use it in a new production cycle as material suitable to obtain a new process. "Second": since it is not produced in a cycle suitably prepared to put it into the market, but rather as waste material, this meaning that it constitutes something that will be abandoned.

The Urban Solid Refuses (USR) are comprised of specific marketable goods classes, the percentages of which can be subjected to little variations.

Said marketable goods variations are also influenced by the habits of the community.

As an average, the USR comprises the following categories: 1) dusts and fine inerts - 13%, 2) organic materials - 27%, 3) wood and plants - 3,5%, 4) paper and cardboard - 25%, 5) plastics - 10,5%, 6) glass and heavy inerts - 5%, 7) fabrics - 4,5%, 8) ferrous materials - 2,5%, 9) washing machines, furniture, spring bed base etc. - 1%, 10) diapers and napkins - 3%, 11) various not classified items - 5%.

It also known that the recycling philosophy has not found any other solution but that of the selection and differentiated reuse of glass, paper, some heavy metals (iron, aluminium), as well as some classes of plastic materials representing the materials that can be reasonably recycled but without a well defined economical advantage due to the selected costs and to the value of the products obtained.

Plastic can be only destined to the manufacture of poor products, glass should be separated by colour, paper asks high regeneration costs, and so on.

Even if civil sludge have a lower quality with respect to the USR, they must not be undervalued both for the environment pollution problems and for high water content (70 / 80 %), and the consequent high transportation costs.

The compost technique along with other organic materials is possible in order to obtain the so called quality compost.

The low request for the compost and the market suspicion make also this solution rather troublesome and surely not suitable as ordinary solution.

A first solution of this kind has been proposed in the Italian patent application N° RM 91A000242, filed on April 9, 1991 and granted on July 15, 1994, with the number 1,244,506.

FR-A-2337588 discloses a process for the disposal of household waste wherein the material is the first subjected to a coarse grinding stage, drying the resulting material and subjecting it to a second grinding stage which reduces the material to the fineness of flour, adding inorganic and organic additives and subsequently granulating the material to obtain granulates suitable for replacing gravel in concrete.

It is now suggested an improvement to this process in order to obtain a final result even more optimal.

The improvement to the transformation process suggested according to the present invention allowed to exploit the inert products, making it universal to be applied and even more attractive as indisputable "elimination method".

The technology suggested according to the present invention, even if is inspired to the technologies of the seventies for the radioactive and noxious refuses, is different as far as the procedure which uses a polymeric additive and not mixtures of aluminium - silicate compositions that, even if have good inertization features, do not have and do not guarantee the physical and mechanical properties obtained by the inventive solution.

Another characteristic of the technology according to the invention is the introduction of a polymeric additive which modifies some aspect of the interaction between the refuse and the cement matrix.

The solution proposed according is economical both under the investment aspect and for the energetic use, and furthermore has a remarkable environmental compatibility.

The above mentioned marketable goods classes are all perfectly consistent with cement once the inertization occurred by the polymeric additive and its specific catalyst.

The sludge too are perfectly consistent after the treatment by the inventive process employing the cement.

The solution according to the invention can, within the limit due to the physical - chemical reasonableness, exploit the compatibility among inert products obtained by the USR and/or sludge transformation with cement.

In fact, the inertized material allows to incorporate the same suitably crumbled, with different granule sizes, within the cement matrix, helping the compatibility process by a polymeric additive and its catalyst.

All the above allows to differentiate the incorporation process of the inert product obtained with the cement that is used with proper ratio with other parts, thus putting into evidence the advantageous technical and mechanical results of the product.

Particularly the advantages obtained can be individuated in the specific weight, porosity, air permeability, freezability, thermal conductivity, fire resistance, hardness, compression resistance and workability.

The products obtained according to the present invention allow to consider the refuse not as something to be eliminated within the cement, but as a classic component of the concrete.

The process according to the present invention is always carried out under cold conditions, except for the heating step (at a temperature of 50 / 60 °C), in order to obtain the useful working and transformation rate for the USR and/or sludge which are dried and micronized, obtaining by suitable heating systems (Electrical resistances) the recovery of steam and during the last product working step, namely in the station where the granules drying step occurs (always at a temperature of 50 / 60 °C), said granules being ready to be put on the market as inert products.

During the study, it has been revealed that the separation and the recycling of many marketable goods USR components is not convenient, in view of the high energetic consumption and of the lack of remuneration from the selling of the mentioned products.

Therefore, by the known solutions it is not convenient to recover the recyclable portion, constituting the 45% of the organic fraction.

In fact, many industries that makes the separation process are not able to eliminate the recovered product, said product remaining with the industry without being sold, in view of the high regeneration costs necessary to the re-use of the same.

Also the compost presently obtained cannot be used as fertiliser since the agricultural operators do not wish to treat the ground in view of the micro amount of plastics, glass and heavy metals contained in the compost.

These are the reasons why the recovered material that cannot be put on the market is charged and brought back at the dump, with the relevant additional costs.

The only fraction that can be used by the recovery of energy present in the refuses, consisting in the extraction of the fraction having the highest calorific power, is the RDF (refuse derived fuel) which is used as alternative comburant in thermoelectric plants, cement factories, etc.)

On the basis of these considerations, in the process according to the invention it is provided the trituration of all the substances comprising the marketable goods classes comprising the USR, both for the dry fraction and for the humid fraction, this in case the sector operators deem it economically valid the trituration of the dry fraction, i.e. of recyclable part.

Thus, according to the invention it is possible to execute according to the specific needing a:
a) transformation process of USR by the recovery of the recyclable fraction;
b) transformation process of USR without recovery of recyclable fraction.

In case (a), the process requires the use of separator machine to be able to recover the recyclable parts (glass, paper, wood, heavy metals, etc.) besides H₂O centrifugal separators with strainers to use again the extracted exceeding water.

In case (b), the process will not require the above mentioned machines, thus obtaining a remarkable reduction of machinery costs and power consumption.

Furthermore, observing in laboratory the transformation phases for each granule, it has been noted that granules having a low permeability and highly dehydrated are obtained.

It has been further verified a high concentration of "hydroxyl groups" that at the moment of the union and mixture with the cement power and water make easier the cement hydration process, thus conferring after the chemical phenomenon a high permeability to the product.

Furthermore, providing the use of cement, which it is well known that has a very high pH, between 11 and 12, the products obtained by the inventive process guarantee the impossibility of life of pathogenic microbacteria or any kind of bacteria.

Furthermore, the heavy metals within the structure are all immobilised, as the respective hydroxides, since the transportation phenomenon of the polar molecules occur only with two possible conditions: by "electric gradient" or by "concentration gradient", that cannot occur since the element obtained is highly inhibited by the solid structure of the cement.

It is therefore specific object of the present invention a process for the cold transformation of urban solid refuses (USR) and/or sludge into inert materials, comprising the steps of:
- feeding USR and/or sludge from respective feeding lines;
- introducing the materials within a micronizer in order to reduce the granulometry and to recover water contained therein;
- adding CaO in an amount between 5 and 10% in weight of the main component;
- adding CaCO₃ in an amount between 5 and 10% in weight of the main component;
- adding a polymeric additive in an amount between 3 and 10% in weight of the main component;
- conveying the product to the shaping and stocking step. Also, according to the invention, it is further added a suitable catalyst in an amount between 20 and 50% in weight.

Always according to the invention, said polymeric additive is chosen among vinyl polyacetate and its derivatives, polyurethane and its derivatives, and a styrene polymer and its derivatives.

Furthermore, according to the invention, said polymeric additive can be applied on the product obtained from USR and/or sludge to be transformed as "suspension" or "solution". The "suspension" treatment occurs when the USR and/or sludge granule to be inertized with the polymeric additive, essentially working as a "painting", thus giving to the transformed granule a low permeability and penetrability of the microporous structures, and is limited to a micro-coating (film), while the "solution" treatment is able to bring the macromolecule and therefore all its molecular properties within micro and macro porosity, obtaining effects surely valid (Insulation, permeability, grip, etc.) with respect to the simple film due to the use of the "suspended" polymeric additive.

Still according to the invention, along the USR feeding line a deferrization device, with mechanical compressor for the scraps, a main coarse triturator, particularly having four cores cutting hammers.

Further, downstream said main triturator and upward said micronizer, a rotating deferrization device with collection comb and a rotating sleeve, with coarse material recovery system and secondary triturator can be provided.

Furthermore, according to the invention, a water recovery tank can be provided downward the micronizer.

Always according to the invention, said product shaping line can provide a granulates line, provided with a dehumidifier group and/or a manufactured product line, provided with a vibrating platform for the formwork.

It further specific object of the present invention, a plant for the realisation of the process described in the above, comprising:
- at least one, preferably two, concrete sump to discharge USR (Urban Solid Refuses) and sludge, respectively;
- at least one, preferably two overhead travelling crane provided with a fork to charge a conveyor band provided with a suitable tank;
- a first horizontal conveyor band provided with charging tank to feed a triturator;
- a deferrization device with scrap mechanical compressor above said first conveyor band;
- a coarse main triturator with cutting hammers;
- a second horizontal conveyor band provided with charging tank to feed the following screen;
- a deferrization device provided with comb to collect fine objects;
- an hexagonal rotating screen;
- a third horizontal conveyor band under the screen, to collect the passing material to bring it to the mixers feeding bands;
- a secondary cutting hammer triturator;
- a fourth sloped conveyor band, suitable to bring to the material not-screened to the second crumbling, provided with sides all along its length, with charging tank, discharge casing and motor provided with a reduction gear;
- a fifth horizontal conveyor band, suitable to transfer the crumbled material to the screen conveyor band;
- a micronizer - heater with water recovery;
- a sixth sloped conveyor band, suitable to transfer the micronized product to the charge and discharge hoppers;
- a CaO (quicklime) reservoir;
- a CaCO₃ (calcium carbonate) reservoir;
- a polymeric additive reservoir;
- eventually a specific catalyst reservoir;
- further three conveyor bands, two of them being horizontally disposed and one being sloped, the latter being under hopper collection basins, to transfer the passing material to the mixers in an alternated way;
- a blade tightness mixer provided with support, gangway, safety parapet, circular section discharge hopper, inspection openings, engine and reduction gear, inlet material weighing systems, additive nebulization system;
- a tenth horizontal conveyor band, suitable to convey the passing material to an extruder;
- an eleventh horizontal conveyor band, suitable to transfer the passing material to the manufactured products line.

The invention further covers the products realised by the process according to the present invention.

The present invention will be now described, for illustrative but not limitative purposes, according to its preferred embodiments, with particular reference to the figures of the enclosed drawings, wherein:
figure 1 is a block diagram of a plant according to the invention; and
figures 2a, 2b and 2c are a scheme of an industrial plant according to the invention.

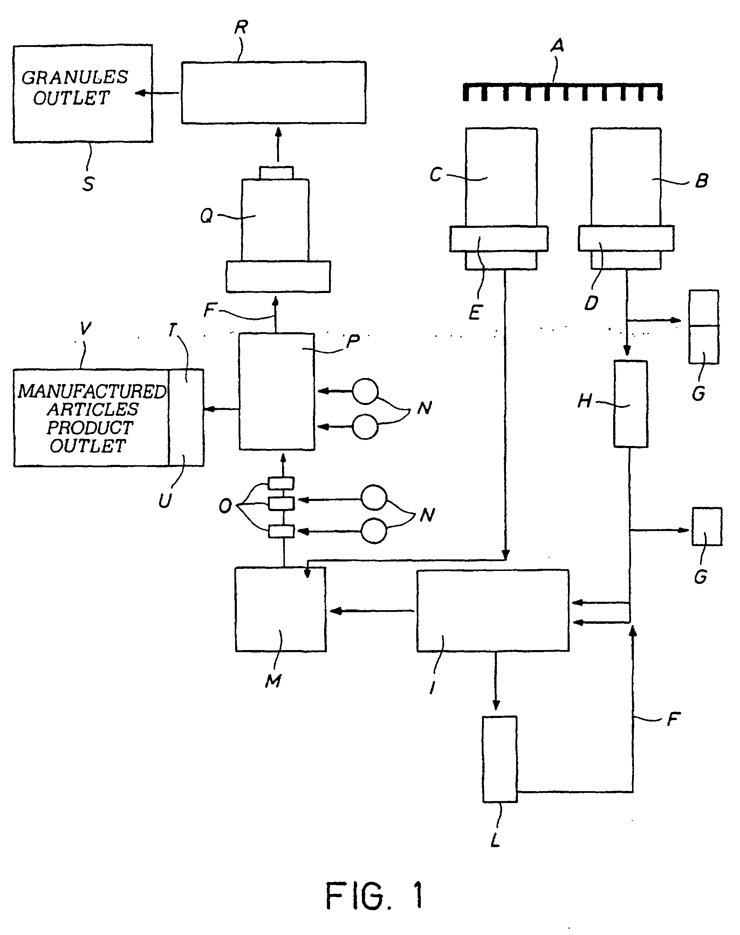

Making reference first to figure 1, it can be noted a block diagram of a plant according to the invention providing an inlet comb A to intercept the bulky materials, a USR hopper B or discharge ditch, a sludge hopper C or discharge ditch, a overhead travelling crane D provided with bucket to collect the USR and a overhead travelling crane E provided with bucket to collect sludge.

Furthermore, a series of conveyor bands or screw feeders F are provided useful to the product working process, a series of deferrization devices G, suitable to eliminate, co-operating with the other deferrization devices, all the ferromagnetic substances, a coarse main triturator H, a rotating screen I to select the refuse during the following treatment steps, a secondary triturator L suitable to finely crumble the refuse marketable goods composition and a micronizer - heater M collecting H₂O vapour.

Further, four tanks N containing the products to be used for the transformation of USR and/or sludge can be noted, specifically CaO (limestone), CaCO₃ (calcium carbonate) and the additives that can be used for the transformation process.

As already said, the additives can be comprised of vinyl poliacetate and its derivatives, polyurethane and its derivatives, and a styrene polymer and its derivatives; a specific catalyst.

Charging and discharging hopper O, a blade mixer ) with nozzles for the nebulization of additive and an automatic batching plant, a granules extruder Q, an air and low temperature (50/60°C) drier - dehumidifier R are further provided, connected each other by mechanical conveyors, managed and co-ordinated by a manual (or computerised, if required) control system, stocking rooms S or final product bag packaging systems, so that the product is ready to be put on the market, formworks T useful to realise the desired product, vibrating plates U useful to compact the humid material within the formworks, and stocking rooms V.

An industrial plant of this kind can be sized on the basis of the receiving capability of the matter to be transformed, considering that every plant will never overcome the working capability between a minimum of 100 t/day and a maximum of 250 t/day or USR and/or sludge.

Thus, in case plants should be manufactured able to transform amounts higher than 250 t/day, it will be advisable to realise them parallelly placed, always bearing in mind that the working time to obtain the finished product will always be of 8 hours.

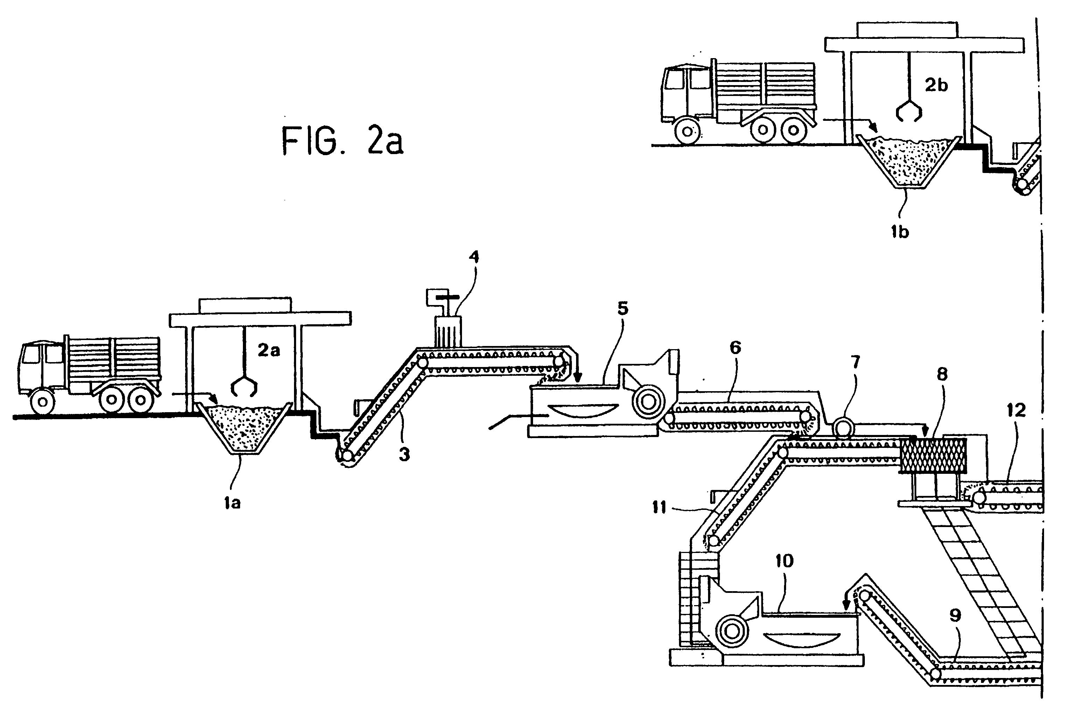

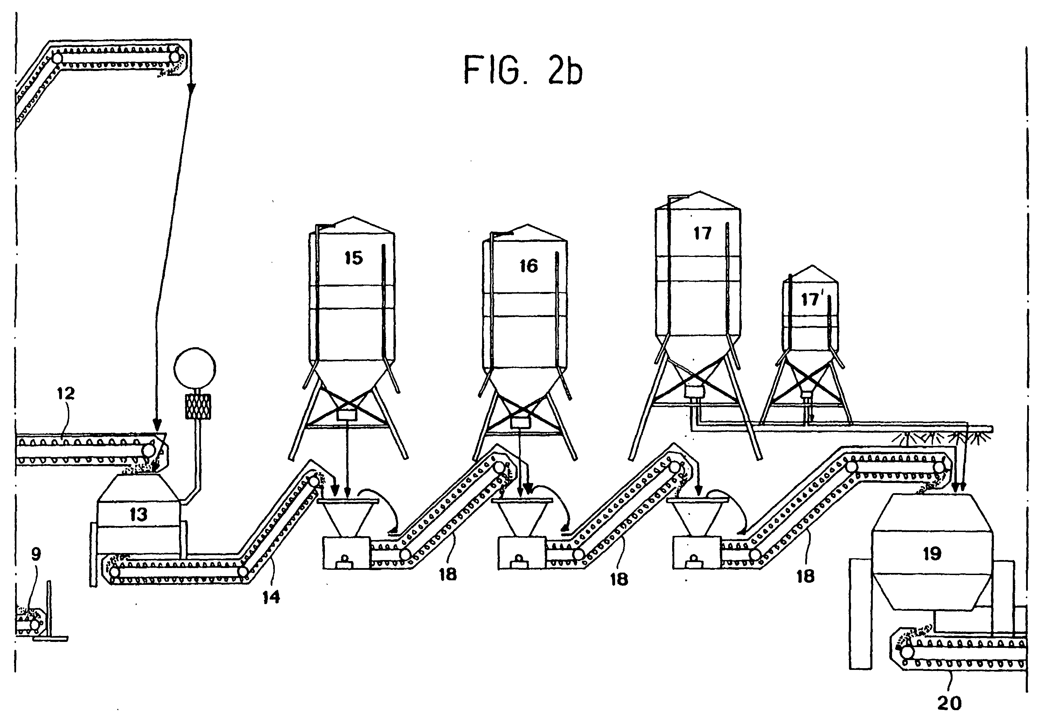

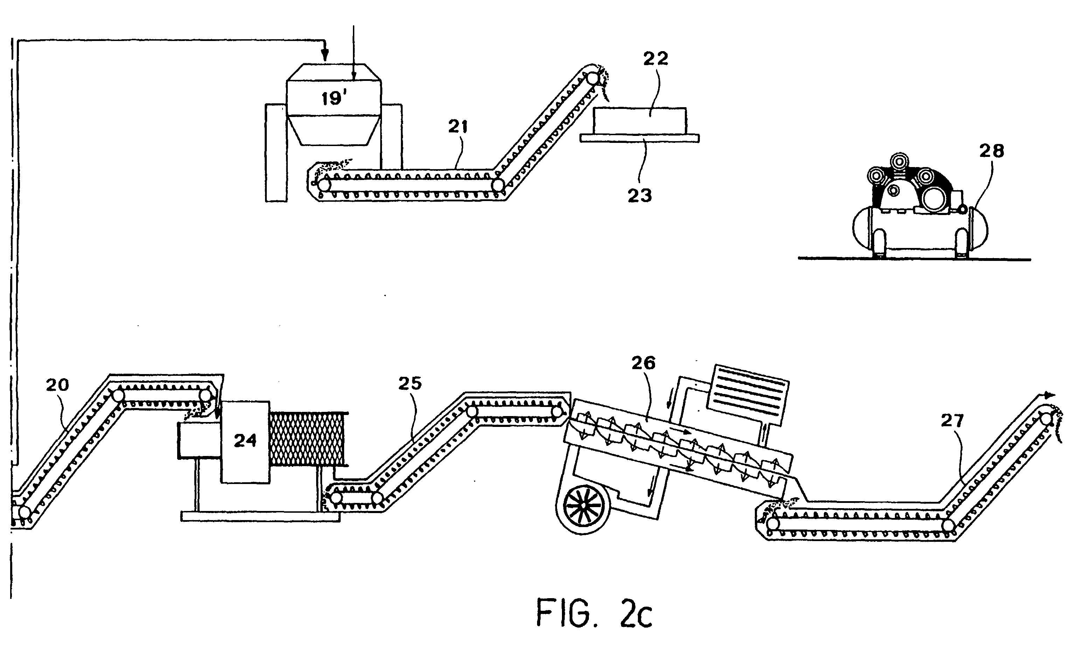

In figures 2a, 2b and 2c a scheme of an industrial plant according to the invention is shown.

The various components of the plant will be listed in the following, preceded by the reference number, putting into evidence their functionality.
1a) 1b): - they are two concrete sump, sized in function of the potentiality f the plant, to discharge USR (Urban Solid Refuses) and sludge.
   The sump will have a frustum - pyramidal shape in such a way to make its emptying easier, without undesired material accumulation of the material on the corners. It will be further provided with railings according to the existing rules.
2a) - 2b): it is a overhead travelling crane suitably sized, provided with a fork to charge a conveyor band provided with a suitable tank.
3): horizontal conveyor band provided with charging tank to feed the triturator.
   Said band will be provided with engine, reduction gear, reversing gear, discharge lateral casings.
4): deferrization device with scrap mechanical compressor above said conveyor band.
5): coarse main triturator with cutting hammers, with four cores - provided with electric motor and hydraulic transmission. It is provided with feeding small opening, comb adjustment, product discharge chute, lateral small openings for maintenance. The machine is placed on a support frame along with the conveying band 3, provided with service gangway and safety railing.
6): a horizontal conveyor band provided with charging tank to feed the following screen.
   Said band will be provided with motor, motoriduttore, reversing gear, lateral discharge casings, covering for all its length, intermediate support stand, plane carpet to drag the material.
7): a deferrization device provided with comb to collect fine objects.
8): an hexagonal rotating screen provided with external transmission, rubber wheeled frame for rest and rotation, tightness cover with inspection manholes, tank to discharge passing material under the screen, not passing material discharge tank, feeding mouth, epicycloidal reduction gear, service gangway, ladder, electric engine.
9): horizontal conveyor band under the screen, to collect the passing material to bring it to the mixers feeding bands. It is provided with sides all along its length, discharge casing and reduction gear engine.
10): secondary cutting hammer triturator, provided with transmission electric motor with hydraulic joint, and double comb for a deep crumbling. It is provided with feeding little opening, comb adjustment, product discharge chute, lateral little openings for maintenance. The machine is placed on a support frame, along with the feeding band 3, provided with service gangway and safety railings.
11): sloped conveyor band, suitable to bring to the material not-screened to the second crumbling, provided with sides all along its length, with charging tank, discharge casing and motor provided with a reduction gear.
12):sloped conveyor band, suitable to transfer the crumbled material to the screen conveyor band. It is provided with sides all along its length, with discharge tank, discharge casing and motoriduttore
13): a micronizer - heater with H2O recovery. The micronizer 13 is comprised by a machine that by its mechanical action, creates fractures to the material that under the action of static forces and dynamic shocks acting on the material solid particles, thrusts them against fixed plates (armours) or movable plates (hammers), thus creating a milling charge reducing its granulometry. At the same time, the material is heated and dried by electric resistances, thus reducing the material rate and recovering water by its vaporisation, that can reintegrated in the working process, namely in the dehumidification step of the humid granulate.
14): sloped conveyor band, suitable to transfer the micronized product to the charge and discharge hoppers. It is provided with sides and covered all along its length with discharge tank, discharge casing and ratio-motor.
15) CaO (quicklime) reservoir.
16) CaCO₃ (calcium carbonate) reservoir.
17) polymeric additive reservoir.
17') specific catalyst reservoir.
18) three conveyor bands, two of them being horizontally disposed and one being sloped, the latter being under hopper collection basins, to transfer the passing material to the mixers in an alternated way. They are provided with sides all along its length, discharge casing and motor with reduction gear.
19 and 19') blade tightness mixer provided with support, gangway, safety parapet, circular section discharge hopper, inspection openings, engine and reduction gear, inlet material weighing systems, additive nebulization system.
20) horizontal conveyor band, suitable to convey the passing material to an extruder. Provided with sides all along its length, discharge casing and motor with reduction gear.
21) horizontal conveyor band, suitable to transfer the passing material to the manufactured products line. Provided with sides all along its length, discharge casing and motor with reduction gear.
22) wood or metal formwork, having different geometrical shapes in function of the manufactured product to be obtained (blocks, bricks, paving tiles, etc.) within which the casting of the humid product obtained by the transformation is carried out, followed by the removal after its hardening.
23): vibrating plate, comprised of a pneumatic or electric hydraulic mechanism, producing vibrations of structure upon which it is applied. The vibrating action is useful for the compaction of the humid product contained within formwork after it has been poured within the same.
24): extruder, comprised of a Archimedean screw or of a piston thrusting the material on a holed grid, thus allowing to obtain different sizes of granules to be used as inert material in building.
25): sloped conveying band suitable to convey the mixed product to the dehumidification group. It is provided with sides and is covered all along its length with a charge tank, discharge casing and motor with reduction gear.
26): dehumidification group for the humid granulate, comprised of two coaxial drums within which, in the outside one, by suitable little openings warm air (50/60°C) is introduced, while in the inner one provided with holes, the material treated by the mixer. It is provided with a methane or gas oil warm air generator, with insulated ducts, motor filter and motoriduttore.
27): horizontal conveying band suitable to bring the transformed material in the stocking zone. It is provided with sides all along its length with charge tank, discharge casing and motor with reduction gear.
28): Electric plant to operate all the machines, comprising a general switch, a synoptic frame, amperometers and voltmeters for the triturators and the general switch, remote control switches, electric cables, motor frame, motor starting and stopping controls with temporised system (in case of accidental stop), a process computerised control system.

Said transformation process can be also applied only to the civil sludge, as well as to those that can be recovered from the river depth, where the sedimentation capability of sludge increases due to the mortality of big quantity of bacterial micro-organisms, that are no more fed by oxygen.

The technology proposed according to the present invention also allows to transform only sludge so that by a suitable assembling of machyneries on a pontoon it is possible to at the same time dredge the depth and transform the sludge into inert material.

In the following the operation of a plant is described wherein only the transformation of sludge is carried out.

Said plant can be for example placed on a pontoon provided with a water-scooping machine that will be used to intake the water / sludge mixture.

The sucked mixture is introduced within a tank, wherein a first decantation occurs, thus by a Archimedean screw it is sent to a triturator - homogenizer, in such a way to make the mixture consistent with the centrifugation and the following extruders.

In the trituration - homogenizing step, the mixture has already lost about 35 / 40 % of the water content, and is sent to a subsequent dehydration, by a "mono" pump to the centrifugation that will work the mixture giving back the dry product with the 30% of water.

At the end of this step, the initial dry amount is given back with an exceeding water amount, ready for the following mixing.

In order to further reduce the amount of water present, said mixture is sent to a drier able to extract water as vapour at the atmospheric pressure, vapour that will be subsequently introduced for the final seasoning of the product.

At the exit of the drier, the material so treated is introduced within a tank, thus sent by two Archimedian screws to the mixer, where the polymeric additive is introduced with a maximum percentage of 10%, along with a specific catalyst, with a percentage variable between 20 and 50% of the main component, plus the 5% of CaO and 10% of CaCO₃ and the product obtained is passed through an extruder so as to make the material of granular shape.

By conveyor bands, the granules are placed within insulated containers, heated by coiled pipes, within which the vapour coming from the drier is introduced.

Said conveyor bands convey the final product within two containers heated by the same vapour, in order to obtain a complete seasoning.

The obtained water, both water obtained from the main decantation and the water from all the other working steps, are sent into a container where a first decantation occurs, thus after a passage through a number of mechanical kind filters, it is sent back to the river at a depth of about 3 meters under the water level, so as not to cause surface opacity and to make it easier the sedimentation of the particles suspended on the bottom.

Thus, all the process can be managed by computerised unit with signals on the control frame.

The product obtained to be used in the different building fields, will contain 90% of sludge with 10% of water, and, as consequence of the material transformation into inert product, the following minimum and maximum percentages are added:
- polymeric additive between 3 and 10%;
- specific catalyst between 20 and 50% of the main component;
- CaO (quicklime) between 5 and 10%;
- CaCO₃ (calcium carbonate) between 5 and 10%.

The drier will need a suitable burner having a potentiality proportioned to the plant size and will be fed with comburant oil of the sulphur low content kind, the plant will practically continuously operate.

The operation is substantially uninterrupted, but for the mixing step, where the "charging, mixing, discharging" times follow each other, two tank having a capacity suitable to guarantee the plant autonomy are suitably placed upward and downward with respect to the mixer.

The working cycle can also start with a filling of the upward tank, on the basis of its receiving capability, so as to guarantee a perfect working of the mixer that will have a capability corresponding to the plant sizes, with a "charging, mixing, discharging" cycle on the basis of the times that will be determined in function of its potentiality.

Immediately downward the mixer, another tank exists having the function of guaranteeing a continues feeding of the extruder, wherein the pre-heated material is extruded and introduced within a conveyor band placed into an insulated container where, by the circulation of the vapour the drying of the material is realised in such a way that it can be then stocked.

At the start of the plant with the machines empty, the transfer of the sludge from the sedimentation tank to the triturator occurs under suitable conditions, with reference to the plant potentiality to be able then to send the transformed material to the final stocking tanks.

Employing the plant described in the above a regime, to work 3t of sludge, about 3 minutes are necessary and a finished product of about 480/500 kg is obtained, depending on the amount of used reactants. Instead, to obtain 3t of final products need a regime between 10 and 12 minutes.

Material obtained by the USR and/or sludge transformation by the process according to the invention is completely "inertized", without microbacterial flora, with optimum physic-mechanical strength and without release of heavy metals.

Said properties are decuced by analysis carried out with specialised institutes, obtaining the following results:
- coliformi fecali = absent
- salmonella = absent
- staphylococci aurea = absent
- pseudomonas Aerruginosa = absent
- spore of closridi sulphite - reducers = absent

Furthermore, the release of heavy metals from the USR and/or sludge transformation, mainly present in the obtained product is completely negligible:
- Cu = 0,02 mg/kg
- Cr = < 0,01 mg/kg
- Pb = 0,03 mg/Kg
- Cd = < 0,001 mg/kg

It has also been verified that the material obtained from the transformation, placed at a temperature of 500°C, has a lost of weight of 25,5%, and smoke developed are not toxic and noxious for man kind.

Furthermore, from the transformed product, observing the chemical - bacteriological results, different kind of materials that can be used in the building field can be obtained:
- civil, industrial and agricultural masonry;
- outdoor and indoor civil floorings;
- every king of urban furniture;
- collection manholes for hydraulic plants;
- highway barriers;
- acoustic and insulating thermal panels;
- prefabricated for agricultural and breeding;
- industrial floorings.

Furthermore, from inert granules mortar and concrete can be obtained.

The sample of USR and/or sludge transformed material has a light specific gravity of 0,67 g/cm³, remarkably lighter than inerts usually aggregated with concrete, thus giving many possibilities of technical applications of the product according to the present invention.

In view of the features of the product obtained by the process and the plant according to the invention, it can be provided any kind of use of the plant.

The material sample is obtained pre-mixing urban solid refuses with sludge from civil depuration plants.

The "slush" thus obtained is added to the additive which causes the mineralization of the organic substance.

The transformation process occurs through substances participating to the reactions and used to guarantee a future functionality of the product.

Furthermore, CaCO₃ is used in the process in order to neutralise the plastic substance of the intertized additive to allow a valid fire resistance without releasing toxic smokes.

Instead, CaO, in view of its great development of heat during the reaction with water, reaches such a temperature to destroy spores which are encapsulated without any possibility by the finished product to release the same.

In this way, the product obtained is inorganic, without spores, with negligible heavy residuals, and furthermore it is well protected against fire, as it can be decuced from the analyses carried out.

The compression results of the samples gave the maximum mechanical features, both for the qualitative and quantitative point of view.

In fact, simple compression breaking tension is characterised by values that as average vary around 340 Kg/cm², which is an acceptable limit with respect to any other considered material.

Furthermore, as to the fracture of the cubes subjected to deflection, it can be clearly noted that the fracture occurs always according to the diagonals of the same.

In order to demonstrate the innovative features of the product according to the invention, a comparison with concrete can be made.

The inventive material, which is of 350 kg/cm² class, with respect to the flexion traction resistance, has obtained a value very close to that of a very high class concrete (550 kg/cm²), being the result of about 28 kg/cm² compared to 39 kg/cm² for concrete.

Another value putting into evidence the features of the transformed product is the freezability: is absolutely has no influence on the material.

Beside these data, it must be revealed a high flexibility, with lowering cambers quite noticeable, but allowing in any case to have a flexion breaking load highly acceptable, and the product as no flaws, and in any case never without warning.

The high deformation gives a rather low value for the modulus of elasticity, however providing an absolutely linear and bilateral curve.

Instead, the thermal conductivity is higher than the one of "concrete" of about 10%, negligible difference, taking into consideration that the material has been compacted by manual vibrators that have not been completely able to avoid voids.

The above problem is obviated by employing machinery suitably for vibrations (vibrating plates).

In this way, it will be possible to reduce the above thermal conductivity percentage, thus reaching the concrete limits.

In the following data of tests carried out on products obtained according to the present invention using only civil sludge will be given for illustrative, but not limitative purposes.

All the above mentioned tests was carried out with the ISTDIL S.p:A. laboratory in Guidonia, employing samples obtained with 90% of civil sludge, adding Ca and CaCO₃, suitably mixed with the same proportion and then micronized and treated with 10% of polymeric additive and a specific catalyst.

### FLEXION RESISTANCE

The flexion resistance has been carried out on a bar having the following dimensions:
1000 x 120 x 120 mm and longitudinally reinforced by 4 irons Φ 8 with improved adherence, two irons placed in the intrados zone and two irons placed in the extrados zone, at a distance of about 25 mm from the comers.

The same bar has been placed on two supports, at a distance of 800 mm each other, and then subjected at simple flexion by a load of 2050 Kgf concentrated on the middle zone.

The obtained results are listed in the following table:

| | | | | | | | | | | |
|---|---|---|---|---|---|---|---|---|---|---|
| load | | | | | | | | | | |
| Kgf | 200 | 400 | 600 | 800 | 1000 | 1200 | 1400 | 1600 | 1800 | 2000 |
| Camber | | | | | | | | | | |
| mm | 0.30 | 0.60 | 1.00 | 1.60 | 2.20 | 2.90 | 3.55 | 4.20 | 4.95 | 5.80 |

It has been verified that the sample subjected to stress directly breaks without any flaw and furthermore from the following tests it is excluded the possibility of eliminating the residual elastic camber, while the breaking is determined as fragile.

Comparing the breaking datum obtained from the above mentioned data with those of a prestressed reinforced, inverted T-shaped bar, having 9 x 12 cm sizes, it can be noted that the value is higher since the latter can bring to breaking with the maximum concentrated charge of 1300 Kgf (this datum is obtained on the basis of laboratory tests inside pre - fabrication factories).

Examining the force and lowering diagram, two zones completely rectilinear can be noted, this fact indicating an elastic behaviour, this behaviour remaining elastic until breaking.

Beside this test, other simple flexion tests have been carried out on 5 samples having 230 x 40 x 20 mm sizes without reinforcements, always with a concentrated load in the middle zone with respect to the distance of the two supports of about 200 mm, as per the enclosed table.

### FLEXION TESTS

| Sample n. | 1 | 2 | 3 | 4 | 5 |
|---|---|---|---|---|---|
| Unitary Load | | | | | |
| (from N/mm²) | 1,28 | 1,18 | 1,28 | 1,36 | 1,23 |
| camber (mm) | 4,10 | 3,78 | 1,59 | 3,69 | 2,96 |

### FREEZABILITY

Freezability tests have been carried out on 4 samples, having 4 x 4 x 17 cm sizes, at a temperature between +15° and -15°C, thus obtaining after 25 cycles a completely positive result, since during the test process no visible modification has been revealed.

### LINEAR THERMAL DILATATION

Tests carried out subjecting a sample at linear thermal dilatation, the unitary deformations of which have been revealed by electrical extensometers HBM of the LY41 kind connected to a data collector HBM of the UPM 60 kind, thus obtaining the values listed in the following table:

| | | | | |
|---|---|---|---|---|
| Amplitude | 29.4°C | 29.4°C | 69.6°C | 69.6°C |
| Strain | 2021 µm/m | 1628 µm/m | 2337 µm/m | 1041 µm/m |
| tima | after 7h and 53' | after 15h and 15' from the preceding | after 7h and 49' from the preceding | after 15h and 47' from the preceding |

From the above table, the data of deformations vs. reported times are shown, from said data being it possible to deduce that the sample subjected to thermal dilatation undergoes to a lengthening of 1041 µm/n.

### SLIDING FRICTION WEARING

Tests has been carried out according to the indications of R.D. 2234 of 16.11.1939.

For a path of 1,000 m, the abrasion coefficient was of 8.68 mm.

### COMPRESSION

Test has been carried out subjecting to simple compression 4 cubic samples having a 40 mm side.

The compression resistance average unitary load was of 3.86 N/mm².

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Process for the cold transformation of urban solid refuses (USR) and/or sludge into inert materials, comprising the steps of:
feeding USR and/or sludge from respective feeding lines, the USR feeding line providing a deferrization device, with mechanical compressor for the scraps, and a main coarse triturator, particularly having four crown cutting hammers;
introducing the materials within a micronizer in order to reduce the granulometry and to recover water contained therein;
adding CaO in an amount between 5 and 10% in weight of the main component;
adding CaCO₃ in an amount between 5 and 10% in weight of the main component;
adding a catalyst in an amount between 20 and 50% in weight;
adding a polymeric additive in an amount between 3 and 10% in weight of the main component, said polymeric additive being chosen among vinyl poliacetate and its derivatives, polyurethane and its derivatives, and a styrene polymer and its derivatives.

2. Process according to claim 1, **characterised in that** downstream said main triturator and upward said micronizer, a rotating deferrization device with collection comb and a rotating sleeve, with coarse material recovery system and secondary triturator can be provided.

3. Process according to one of the preceding claims, **characterised in that** according to the invention, a water recovery tank can be provided downward the micronizer.

4. Process according to one of the preceding claims, **characterised in that** a shaping and stocking step is provides, said step providing a product shaping, line comprising a granulates line, provided with a dehumidifier group and/or a manufactured product line, provided with a vibrating platform for the formwork.

5. Plant for the realisation of the process according to one of the preceding claims comprising, all or as partial combination:
at least one, preferably two, concrete sump (B,C) to discharge URS (Urban Solid Refuses) and sludge, respectively;
at least one, preferably two overhead traveling crane (D) provided with a fork to charge a conveyor band provided with suitable tank;
a first horizontal conveyor band (F) provided with charging tank to feed a triturator;
a deferrization device (G) with scrap mechanical compressor above said first conveyor band (F);
a coarse main triturator (H) with cutting hammers;
a second horizontal conveyor band (F) provided with charging tank to feed the following screen;
a deferrization device (G) provided with comb to collect fine objects;
an hexagonal rotating screen;
a third horizontal conveyor band (F) under the screen, to collect the passing material to bring it to mixers feeding bands;
a secondary cutting hammer triturator (H);
a fourth sloped conveyor band (F) suitable to bring to the material not-screened to a second crumbling, provided with sides all along its length, with charging tank, discharge casing and motor provided with a reduction gear;
a fifth horizontal conveyor band (F), suitable to transfer the crumbled material to the screen conveyor band (G);
a micronizer - heater (M) with water recovery;
a sixth sloped conveyor band, suitable to transfer the micronized product to charge and discharge hoppers;
a CaO (quicklime) reservoir (N);
a CaCO₃ (calcium carbonate) reservoir (N);
a polymeric additive reservoir (N);
eventually a specific catalyst reservoir (N);
further three conveyor bands, two of them being horizontally disposed and one being sloped, the latter being under hopper collection basins (O), to transfer the passing material to the mixers in an alternated way;
a blade tightness mixer provided with support, gangway, safety parapet, circular section discharge hopper, inspection openings, engine and reduction gear, inlet material weighing systems, additive nebulization system;
a tenth horizontal conveyor band, suitable to convey the passing material to an extruder;
an eleventh horizontal conveyor band, suitable to transfer the passing material to the manufactured products line.

## Patentansprüche

1. Verfahren zur Kaltumwandlung von städtischen festen Abfällen (USR) und/oder Schlamm in inerten Materiallen, umfassend folgende Schritte:
- Zuführung von USR und/oder Schlamm von den jeweiligen Zuführungslinien, wobei die USR- Zuführungslinie eine Enteisenungsvorrichtung mit mechanischem Verdichter für die Schrotte und einer groben Hauptmühle, insbesondere ausgestattet mit vier Fladerschnitt-Hämmern, beliefert,
- Einführung der Materialien in eine Strahlmühle zur Reduzierung der Korngröße und zur Rückgewinnung von darin enthaltenem Wasser,
- Zufügen von CaO in einer Menge zwischen 5 und 10 Gew.-% in Bezug auf die Hauptbestandtelle.
- Zufügen von CaCO₃ in einer Menge zwischen 5 und 10 Gew.-% in Bezug auf die Haupthestandteile,
- Zufügen eines Katalysators in einer Menge zwischen 20 und 50 Gew.-%,
- Zufügen eines polymeren Additivs in einer Menge zwischen 5 und 10 Gew.-% in Bezug auf die Hauptbestandteile, wobei das besagte polymere Additiv aus Vinyl Polyacetat und dessen Derivaten, Polyurethan und dessen Derivaten und einem Styrolpolymer und dessen Derivaten ausgewählt wird.

2. Verfahren nach Anspruch 1, **dadurch gekennzeichnet, dass** stromabwärts der besagten Hauptmühle und aufwärts der besagten Strahlmühle eine rotierende Enteisenungsvorrichtung mit Sammelkamm und einer rotierenden Muffe, mit einen System zur Detektion grobkömigen Materials und einer zweiten Mühle vorgesehen sein kann.

3. Verfahren nach einem der vorgenannten Ansprüche, **dadurch gekennzeichnet, dass** gemäß der Erfindung unterhalb der Strahlmühle ein Wasserrückgewinnungstank vorgesehen sein kann.

4. Verfahren nach einem der vorgenannten Ansprüche, **dadurch gekennzeichnet, dass** ein Form- und Lagerschritt vorgesehen ist, wobei in dem besagten Schritt eine produktformende Linie vorgesehen ist, die eine Granulatlinie beinhaltet, die mit einer Entfeuchtergruppe und/oder einer Produktfertigungslinie versehen ist, die mit einer vibrierenden Plattform für die Schalung versehen ist.

5. , Anlage zur Realisierung des Verfahrens nach einem der vorgenannten Ansprüche, umfassend im Ganzen oder als Kombination von Teilen:
- mindestens ein, vorzugsweise zwei Betongruben (B, C), um städtische feste Abfälle (URS) beziehungsweise Schlamm zu entladen;
- mindestens einen, vorzugsweise zwei Hochbahnkräne (D), versehen mit einer Gabel um einen Förderer zu beladen, der mit einem geeigneten Behälter versehen ist,
- einem ersten horizontalen Förderband (F), versehen mit einem Ladebehälter zur Beschickung einer Mühle;
- eine Enteisenungsvorrichtung (G) mit mechanischem Schrottverdichter über dem besagten ersten Förderband (F);
- eine grobe Hauptmühle (H) mit Schneidhämmern;
- ein zweites horizontales Förderband (F) versehen mit einem Ladebehälter zur Beschickung des nachfolgenden Drahtgitters;
- eine Enteisenungsvorrichtung (G), versehen mit einem Kamm, um feine Objekte zu sammeln;
- ein hexagonales rotierendes Drahtgitter;
- ein drittes horizontales Förderband (F) unter dem Drahtgitter, um das durchfallende Material zu sammeln und dieses zu Mixer beschickenden Bändern zu transportieren;
- eine zweite Schneldhammermühle;
- ein viertes, geneigtes Förderband (F), geeignet um das nicht gesiebte Material zu einem zweiten Brecher, versehen mit Seitenwänden entlang seiner Länge, mit einem Beladungsbehälter, einem Entladungsgehäuse und einem Motor, versehen mit einem Untersetzungsgetriebe;
- ein fünftes horizontales Förderband (F), geeignet um das gebrochene Material zu dem Sieb- Förderband (G) zu transportieren;
- ein Strahlmühlen - Heizgerät (M) mit Wasserrückgewinnung;
- ein sechstes, geneigtes Förderband, geeignet um das gemahlene Produkt zu Lade- und Entladetrichtern zu transportieren;
- einen CaO (ungelöschter Kalk) Behälter (N);
- einen CaCO₃ (Calciumcarbonat) Behälter (N);
- einen Behälter für polymeres Additiv (N);
- eventuell einen Behälter für einen speziellen Katalysator;
- weitere drei Förderbänder, zwei von diesen horizontal angeordnet und eines geneigt, das letztgenannte unter Trichtersammelbecken (O) angeordnet, um das durchgehende Material auf einem alternativen Weg zu den Mixern zu transportieren;
- einen dichten Lamellenmixer, versehen mit Stützen, Arbeitsgang, Sicherheitsgeländer, Entladetrichter mit rundem Querschnitt, Inspektionsöffnungen, Motor mit Untersetzungsgtriebe, Aufgabematerial - Wiegesystemen, Additiv - Zerstäubungssystem;
- ein zehntes horizontales Förderband, geeignet, das durchgehende Material zu einem Extruder zu fördern;
- ein elftes horizontales Förderband, geeignet, das durchgehende Material zu der Produktfertigungslinie zu fördern.

## Revendications

1. Procédé pour la transformation à froid de déchets solides urbains (DSU) et/ou de boues en matériaux inertes, comprenant les étapes qui consistent à :
amener les DSU et/ou les boues par des lignes d'alimentation respectives, la ligne d'alimentation des DSU étant dotée d'un dispositif de déferrisation, avec un compresseur mécanique pour les déchets, et d'un broyeur grossier principal, ayant, en particulier, des marteaux tranchants à quatre diamants ;
introduire les matériaux dans un microniseur afin d'en réduire la granulométrie et de récupérer l'eau qui y est contenue ;
ajouter du CaO en une quantité comprise entre 5 et 10 % en poids du composant principal ;
ajouter du CaCO₃ en une quantité comprise entre 5 et 10 % en poids du composant principal ;
ajouter un catalyseur en une quantité comprise entre 20 et 50 % en poids;
ajouter un additif polymère en un quantité comprise entre 3 et 10 % en poids du composant principal, ledit additif polymère étant choisi parmi le poly(acétate de vinyle) et ses dérivés, le polyuréthanne et ses dérivés, et un polymère styrénique et ses dérivés.

2. Procédé selon la revendication 1, **caractérisé en ce qu'**il peut être prévu, en aval dudit broyeur principal et en amont dudit microniseur, un dispositif de déferrisation rotatif ayant un peigne collecteur et un fût rotatif, avec un système de récupération des matériaux grossiers et un broyeur secondaire.

3. Procédé selon l'une des revendications précédentes, **caractérisé en ce que**, selon l'invention, un réservoir de récupération d'eau peut être prévu en aval du microniseur.

4. Procédé selon l'une des revendications précédentes, **caractérisé en ce qu'**il est prévu une étape de façonnage et de stockage, ladite étape utilisant une ligne de façonnage de produit comprenant une ligne de traitement de granulats, pourvue d'un groupe déshumidificateur, et/ou une ligne de traitement de produits manufacturés, pourvue d'une plate-forme vibrante pour le coffrage.

5. Installation pour la réalisation du procédé selon l'une des revendications précédentes, comprenant, en totalité ou sous la forme d'une combinaison partielle :
au moins une, de préférence deux, cuves à béton (B, C) pour décharger respectivement les DSU (Déchets Solides Urbains) et les boues ;
au moins une, de préférence deux, grues à pont roulant (D) pourvues d'une fourche pour charger une bande transporteuse pourvue d'un réservoir approprié ;
une première bande transporteuse horizontale (F) pourvue d'un réservoir de chargement pour alimenter un broyeur ;
un dispositif de déferrisation (G) ayant un compresseur mécanique pour les déchets, au-dessus de ladite première bande transporteuse (F) ;
un broyeur principal grossier (H) pourvu de marteaux tranchants ;
une deuxième bande transporteuse horizontale (F) pourvue d'un réservoir de chargement pour alimenter le tamis suivant ;
un dispositif de déferrisation (G) pourvue d'un peigne pour collecter les objets fins ;
un tamis rotatif hexagonal ;
une troisième bande transporteuse (F) sous le tamis, pour collecter les matériaux ayant traversé, afin de les amener jusqu'à des bandes d'alimentation de mélangeurs ;
un broyeur à marteaux tranchants secondaire (H) ;
une quatrième bande transporteuse inclinée (F), appropriée pour amener le matériau non tamisé jusqu'à un poste d'émiettage secondaire, pourvue de parois sur toute sa longueur, avec un réservoir de chargement, une caisse de déchargement et un moteur pourvu d'un engrenage de réduction ;
une cinquième bande transporteuse horizontale (F), appropriée pour transférer le matériau émietté sur la bande transporteuse de tamis (G) ;
un microniseur - chauffeur (M) avec récupération d'eau ;
une sixième bande transporteuse inclinée, appropriée pour transférer le produit micronisé vers des trémies de chargement et déchargement ;
un réservoir de CaO (chaux vive) (N) ;
un réservoir de CaCO₃ (carbonate de calcium) (N) ;
un réservoir d'additif polymère (N) ;
finalement, un réservoir de catalyseur spécifique (N) ;
en outre, trois bandes transporteuses, dont deux sont disposées horizontalement et une est inclinée, la dernière se trouvant sous des bassins de collecte de trémie (O), pour transférer les matériaux ayant traversé jusqu'aux mélangeurs, d'une manière alternée ;
un mélangeur à pales étanche, pourvu d'un support, d'une passerelle, d'un parapet de sécurité, d'une trémie de déchargement à section circulaire, d'ouvertures d'inspection, d'un moteur et d'un engrenage de réduction, de systèmes de dosage de matériau d'entrée, d'un système de nébulisation d'additifs ;
une dixième bande transporteuse horizontale, appropriée pour transporter le matériau ayant traversé jusqu'à une extrudeuse ;
une onzième bande transporteuse horizontale, appropriée pour transférer le matériau ayant traversé jusqu'à une ligne de traitement de produits manufacturés.
